# EUROPÄISCHE PATENTANMELDUNG

(11) **EP 3 037 608 A1**
(43) Veröffentlichungstag der Anmeldung: **29.06.2016**
(21) Anmeldenummer: 14200301.1
(22) Anmeldetag: 24.12.2014
(51) Int. Cl.: E04H 5/02, E04H 9/02

(54) **Montagesystem für modulare Industrieanlagen**

(71) Anmelder: Rv Lizenz AG, 6301 Zug (CH)
(72) Erfinder: Rüdlinger, Mikael, 6330 Cham (CH)
(74) Vertreter: Rentsch Partner AG

(57) **Zusammenfassung**

Eine Modulare Anlage (1), insbesondere eine modulare Industrieanlage, umfasst mehrere quaderförmige Anlagemodule (20, 20a, 40, 40a, 40b, 40c), die in zwei oder mehr Lagen übereinander gestapelt angeordnet sind. Die Module weisen eine Tragstruktur (78) mit Befestigungspunkten (24, 24', 44, 44') auf, wobei die Befestigungspunkte vorgesehen sind zu Verbindung eines Moduls mit entsprechenden Befestigungspunkten der angrenzenden Module einer darüber und/oder darunter liegenden Lage. Die Module (20, 40) einer Lage sind mit den angrenzenden Modulen (40, 20) der darüber und/oder darunter liegenden Lage in der horizontalen Ebene (x-y) formschlüssig verbunden (24, 24', 64, 44, 44'). Es ist mindestens eine Zugkraftvorrichtung (62, 70, 80) mit einem Zugelement (62) vorgesehen, mit der entlang der Senkrechten (z) eine unterste Lage von Modulen (40a) bzw. ein Fundamentblock (6) gegenüber einer obersten Lage von Modulen (40c) mit einer Zugkraft beaufschlagt werden kann, so dass die Module zwischen der genannten untersten Lage und der genannten obersten Lage mit den angrenzenden Modulen (40, 20) der darüber und/oder darunter liegenden Lage entlang der Senkrechten (z) an den Befestigungspunkten kraftschlüssig aneinandergedrückt und so fixiert werden.

## Beschreibung

### Gebiet der Technik

Die Erfindung betrifft modulare Anlagen, insbesondere modulare Industrieanlagen, Versorgungsanlagen, Produktionsanlagen etc. Die Erfindung betrifft weiter Module für solche Anlagen, sowie Montagesets für den Aufbau modularer Anlagen, gemäss den Oberbegriffen der unabhängigen Ansprüche.

### Technologischer Hintergrund

Für bestimmte Anlagen, insbesondere Industrieanlagen, Versorgungsanlagen, Produktionsanlagen, etc kann es wünschenswert sein, diese modular aufzubauen, um beispielsweise eine schnelle und effiziente Anpassung an neue Anforderungen zu ermöglichen. Dies kann beispielsweise bei chemischen Produktionsanlagen der Fall sein, wenn eine Änderung des zu produzierenden Produkts eine Anpassung bzw. einen Austausch der einzelnen Komponenten notwendig macht. Solche grosschemische Anlagen erfordern häufig die Anordnung einer grösseren Anzahl von Anlagenmodulen in mehreren übereinanderliegenden Montageebenen. Dazu sind im Stand der Technik mehrere Arten offener Gerüststrukturen und auch geschlossener Gebäude bekannt.

Bei Industrieanlagen werden häufig Anlagenelemente eingesetzt, welche Schwingungen verursachen, beispielsweise Motoren, Turbinen, etc. Industrieanlagen müssen deshalb möglichst so aufgebaut sein, dass sich solche Schwingungen nicht in der Gesamtkonstruktion ausbreiten oder gar aufschaukeln können.

Grosse Industrieanlagen, insbesondere chemische Fabrikationsanlagen oder Erdölraffinerien, sind besonders gefährdet bei Naturkatastrophen wie Erdbeben oder Stürmen. In Regionen mit einem erhöhten Risiko für solche Katastrophen, oder in besonders gefährdeten Gebieten, beispielsweise in dicht besiedelten Gebieten, müssen solche Anlagen derart konstruiert sein, dass sie selbst extremen äusseren Einflüssen standhalten können. Die räumlichen Dimensionen wie auch der häufig vorhandene modulare Aufbau solcher Anlagen erschweren stark die Erfüllung dieser Anforderung. Ebenso variieren Anzahl, Arten, Grössen und Gewichte der einzelnen Anlagenmodule (Komponenten) meist stark von Anlage zu Anlage. Ebenso können sich die Eigenschaften einer Anlage während deren Lebensdauer stark verändern, etwa weil die Auslastung der Anlage schwankt oder weil die Anlage umgebaut wird und Anlagenmodule ersetzt, entfernt oder hinzugefügt werden. Muss die Trägerstruktur einer solchen Anlage den neuen Umständen angepasst werden, sind häufig teure Änderungen in deren meist komplexen Architektur notwendig, basierend auf aufwendigen und kostspieligen (dynamischen) strukturmechanische Analysen.

Ebenfalls vorteilhaft ist ein modularer Aufbau bei Industrieanlagen, bei welchen diese in effizienter Weise zerlegt und transportfähig gemacht werden muss, um beispielsweise an einen entlegenen Standort transportiert und wieder aufgebaut zu werden. Mögliche Anwendungen sind hier beispielsweise Kraftwerke, Verarbeitungsanlagen, Steueranlagen, etc., welche im Bergbau benötigt werden, wobei jedoch der Stand evtl. nach ein paar Jahren geändert werden muss.

EP 0572814 A1 zeigt eine chemischen Anlage, die einen mehrgeschossigem Baukörper mit verschiedenen Bausegmenten mit übereinander liegenden Räumen aufweist. In diesen Räumen sind auf mobilen Gestellen die Anlagenkomponenten mit den dazugehörigen Anschlüssen untergebracht. Die Anlagenkomponenten können auf den Gestellen rasch seitlich aus den Räumen entnommen und ausgetauscht werden. Die Grundstruktur hingegen ist fix, und kann nicht auf einfache Weise modifiziert oder ausgetauscht werden.

Modulare Systeme sollten vorteilhaft aus relativ kleinvolumigen Einzelteilen bestehen, um diese effizient transportieren zu können. der Aufbau und Abbau wiederum sollte ohne grossen konstruktiven Aufwand möglich sein.

Es ist bekannt, Einzelmodule in der Grösse von Standard-Frachtcontainern zusammenzusetzen, beispielsweise für die Errichtung temporärer Gebäude für Grossbaustellen. Solche modulare Systeme sind wegen der Standardformate der Module einfach zu transportieren, und können wie normale Frachtcontainer nebeneinander und übereinander gestapelt werden. Jedoch sind solche Aufbauten nur beschränkt stabil, und insbesondere geschützt gegen starke mechanische Belastungen, wie sie beispielsweise bei Erdbeben auftreten.

Aus dem Stand der Technik sind weiter Systeme bekannt zum Bau von Gebäuden, die gegen Naturkatastrophen wie Erdbeben und Stürme speziell geschützt sind.

US 6151844 beschreibt Strukturen zur Erstellung von ein- oder mehrstöckigen Gebäuden mit durch Zugstangen in vertikaler Richtung vorgespannten Wandelementen. Durch die Vorspannung der Wandelemente werden diese gegen äussere Windeinwirkungen und Erdbeben stabilisiert.

WO 2005/121464 A1 beschreibt Rahmenstrukturen für erdbebensichere modulare Gebäude, bei welchen die Träger in Verbindungsknoten zusammenkommen, so dass Kräfte von den Trägern konzentrisch zu diesen Knoten übertragen werden.

WO 95/30814 A1 beschreibt schwingungsgedämpfte und erdbebensichere Gebäude, bestehend aus einem verformbaren vertikalen Kerngebäude, und einer dieses umgebenden äusseren Struktur, die mittels Energie absorbierender Dämpfelemente verbunden sind. Die äussere Struktur besteht aus einem unteren Teil, der gegen den Untergrund hin schwingungsgedämpft gelagert ist, und einem darauf gelagerten oberen Teil.

US 4766708 beschreibt ein modulares System für schwingungsgedämpfte Baustrukturen. Das System weist eine Rahmenstruktur mit im Wesentlichen rechteckigen Aufnahmebereichen auf, in welchen modulare Einheiten eingefügt werden können. Die Aufnahmebereiche verfügen jeweils über schwingungsisolierende Elemente.

Keines dieser Systeme ermöglicht die Realisierung von modularen Industrieanlagen, die flexibel ausgestaltet werden können, effizient aufgebaut und abgebaut werden können, deren Module einfach transportiert werden können, und gleichzeitig sicher sind gegenüber extremen mechanische Belastungen wie Erdbeben oder Stürmen.

Es besteht deshalb das allgemeine Bedürfnis nach Fortschritten in diesem Bereich.

### Aufgabe der Erfindung

Aufgabe der Erfindung ist es, Modulare Anlagen der eingangs erwähnten Art zur Verfügung zu stellen, welche die oben erwähnten und andere Nachteile nicht aufweisen.

Eine erfindungsgemässe modulare Anlage sollte vorteilhaft die flexible Planung und Gestaltung der Anlage erlauben. Die genannten modularen Anlagen sollen effizient aufgebaut und abgebaut werden können. Gleichzeitig soll die modulare Anlage sicher sein gegenüber extremen mechanische Belastungen wie Erdbeben oder Stürmen, aber auch allgemeinen Witterungseinflüssen.

Die einzelnen Module der Anlage sind vorteilhaft einfach transportierbar. Die Grundstruktur der einzelnen Anlagenmodule soll kostengünstig herstellbar sein.

Eine andere Aufgabe der Erfindung ist es, Montagesets für den Aufbau modularer Anlagen bereit zu stellen, welche den Aufbau solcher Anlagen aus einzelnen Modulen erlaubt.

Diese und andere Aufgaben werden gelöst durch eine erfindungsgemässe modulare Anlage, erfindungsgemässe Module für modulare Anlagen, sowie erfindungsgemässe Montagesets zum Aufbau modularer Anlagen, gemäss den unabhängigen Ansprüchen. Weitere bevorzugte Ausführungsformen sind in den abhängigen Ansprüchen gegeben.

### Darstellung der Erfindung

Im Rahmen dieser Offenbarung bezieht sich der Begriff "modulare Anlage" unter anderem auf Industrieanlagen, die aus einzelnen Modulen bestehen, beispielsweise chemische Produktionsanlagen, bei denen typischerweise verschiedene Komponenten (z.B. Reaktoren, Tanks, Filter, Pumpen, Wärmetauscher, etc.) miteinander operativ verbunden sind, beispielsweise über Leitungen, etc.

Solche Industrieanlagen können auch andere Verarbeitungsanlagen umfassen, beispielsweise Vorrichtungen zum Zerkleinern, Waschen, Sortieren oder Transportieren von Gestein, beispielsweise im Bergbau. Auch Kraftwerke können modular aufgebaut werden. Aus der WO 2011/061299 A1 der Anmelderin ist zum Beispiel eine Anlage zur Verwertung von kohlenstoffhaltigen Materialien und zur Erzeugung von Energie bekannt. Auch eine solche Anlage lässt sich als modulare Anlage realisieren.

Dem Fachmann ist klar, dass vom Begriff "modulare Anlage" im wesentlichen alle technischen oder industriellen Anlagen und Einrichtungen umfasst werden, die aus einzelnen Modulen bestehen bzw. bestehen können, insbesondere chemische Produktionsanlagen, Kraftwerkanlagen, Versorgungsanlagen, Reinigungsanlagen, Verarbeitungsanlagen etc., jedoch auch andere Anlagen wie Lagersysteme, Parkhäuser, modulare Gebäude, die aus einzelnen Modulen aufgebaut werden können.

Eine erfindungsgemässe modulare Anlage weist mehrere quaderförmige Anlagemodule auf, die in zwei oder mehr Lagen übereinander gestapelt angeordnet sind. Die Module weisen eine Tragstruktur mit Befestigungspunkten auf, wobei die Befestigungspunkte vorgesehen sind zu Verbindung eines Moduls mit entsprechenden Befestigungspunkten der angrenzenden Module einer darüber und/oder darunter liegenden Lage. Die Module einer Lage sind mit den angrenzenden Modulen der darüber und/oder darunter liegenden Lage in der horizontalen Ebene (in der Waagrechten) formschlüssig verbunden. Es ist weiter mindestens eine Zugkraftvorrichtung mit einem Zugelement vorgesehen, mit der entlang der Senkrechten (Lot-Achse) eine unterste Lage von Modulen bzw. ein Fundamentblock gegenüber einer obersten Lage von Modulen mit einer Zugkraft beaufschlagt werden kann, so dass die Module zwischen der genannten untersten Lage und der genannten obersten Lage mit den angrenzenden Modulen der darüber und/oder darunter liegenden Lage entlang der Senkrechten an den Befestigungspunkten kraftschlüssig aneinandergedrückt und so fixiert werden.

Die Zugkraftvorrichtung umfasst vorteilhaft einen Anker für das Zugelement in einem Modul der untersten Lage, und eine Spannvorrichtung, mit welcher das Zugelement gespannt werden kann, und/oder die Zugspannung aufrecht erhalten werden kann. Das Zugelement kann beispielsweise als eine einzige oder mehrere parallele Zugstangen ausgeführt sein, oder als ein einzelnes oder mehrere parallele Zugseile. Besonders vorteilhaft weist die Zugkraftvorrichtung ein Federelement auf, welches Längenänderungen des Zugelements aufgrund äusserer Faktoren, beispielsweise Temperaturänderungen, in einem bestimmten Mass ausgleichen kann.

Vorteilhaft sind bei einer solchen modularen Anlage wechselweise Lagen mit einem Träger-Modul und einem oder mehreren Funktionsmodulen übereinander angeordnet sind.

In einer anderen vorteilhaften Ausführungsvariante einer solchen modularen Anlage sind die Module derart angeordnet, dass bei mindestens einer Lage von Modulen die Befestigungspunkte von zwei oder mehr Modulen der genannten Lage mit Befestigungspunkten eines gemeinsamen Moduls einer darüber liegenden und/oder einer darunter liegenden Lage verbunden sind. Dies führt dazu, dass benachbarte Module einer Lage über das gemeinsam verbundene Modul einer anderen Lage mechanisch verbunden sind, was bei der gesamten Anlage zu einer Versteifung führt.

Ebenso ist es vorteilhaft, wenn bei einer erfindungsgemässen modularen Anlage die Module derart verschränkt angeordnet und gestapelt sind, dass zumindest ein Teil der Module ein dreidimensionales Gitter bilden. Auch dieses Merkmal führt mechanischen Versteifung der gesamten Anlage.

Die derart gesamthaft mechanisch stabilisierte modulare Anlage kann aufgrund ihrer grossen Steifheit nur in einem sehr geringen Ausmass schwingen, so dass durch einzelne Anlageteile oder äussere mechanische Einflüsse, beispielsweise Windeinwirkung oder Erdbeben, verursachte Schwingungen sich nicht aufschaukeln können, und die Eigenfrequenzen der Struktur möglichst hoch sind.

Alternativ oder zusätzlich sind bei einer solchen erfindungsgemässen modularen Anlage auf einer Oberseite der Tragstruktur der Module drei oder mehr Lagerelemente angeordnet, die eine erste Ebene definieren; und sind auf einer der Oberseite abgewandten Unterseite der Tragstruktur drei oder mehr Lagerelemente angeordnet sind, die eine zur ersten Ebene parallele zweite Ebene definieren. Jeweils ein Lagerelement auf der Oberseite und ein Lagerelement auf der Unterseite bilden ein Paar und sind gefluchtet zueinander entlang einer zur Normalen der Ebenen parallelen Geraden angeordnet. Die Lagerelemente dienen als Befestigungspunkte der Module.

Besonders vorteilhaft weisen bei einer solchen Ausführungsform einer erfindungsgemässen Anlage die Lagerelemente der Module eine konische Aufnehmung auf. Zusätzlich oder alternativ weisen die Lagerelemente der Module eine zentrale Öffnung auf, so dass durch die Öffnungen entlang der durch jeweils zwei gepaarte Lagerelemente definierten Geraden ein Zugelement durchführbar ist bzw. durchgeführt ist.

Zwischen zwei gepaarten Lagerelementen eines Moduls kann jeweils eine Tragsäule angeordnet sein. Diese nimmt die statische Kräfte entlang der Senkrechten auf.

In einer vorteilhaften Variante sind zwei einander zugewandte Lagerelemente zweier aneinandergrenzender Module benachbarter Lagen durch ein Verbindungselement verbunden. Besonders vorteilhaft weisen die Lagerelemente der Module eine konische Ausnehmung auf, und weist das Verbindungselement die Form eines Doppelkegels oder eines Doppelkegelstumpfs auf, wobei jeweils ein Kegel bzw. Kegelstumpf des Verbindungselements bündig in der konischen Aufnahme eines der zwei Lagerelemente angeordnet ist. Das Verbindungselement weist vorteilhaft ein Durchloch aufweist, durch welches ein Zugelement durchführbar ist bzw. durchgeführt ist.

Besonders vorteilhaft sind bei einer erfindungsgemässen modularen Anlage die Module derart angeordnet, dass die Lagerelemente aller Module entlang einer Mehrzahl von zur Senkrechten parallelen Geraden gefluchtet sind. Entlang jeder dieser Geraden ist ein Zugelement durchführbar bzw. ist ein Zugelement angeordnet.

Ein erfindungsgemässes Modul für eine modulare weist eine Tragstruktur auf, wobei auf einer Oberseite der Tragstruktur drei oder mehr Lagerelemente angeordnet sind, die eine erste Ebene definieren, und auf einer der Oberseite abgewandten Unterseite der Tragstruktur drei oder mehr Lagerelemente angeordnet sind, die eine zur ersten Ebene parallele zweite Ebene definieren. Jeweils ein Lagerelement auf der Oberseite und ein Lagerelement auf der Unterseite bilden ein Paar und sind gefluchtet zueinander entlang einer zur Normalen der Ebenen parallelen Geraden angeordnet.

Vorteilhaft weisen die Lagerelemente eines solchen erfindungsgemässen Moduls eine konische Ausnehmung auf. Alternativ oder zusätzlich weisen die Lagerelemente eine zentrale Öffnung auf, so dass durch die Öffnungen entlang der durch jeweils zwei gepaarte Lagerelemente definierten Geraden ein Zugelement durchführbar ist.

In einer weiteren vorteilhaften Variante ist zwischen zwei gepaarten Lagerelementen jeweils eine Tragsäule angeordnet.

An der Tragstruktur eines solchen Moduls kann eine äussere Hülle angebracht sein. In einer vorteilhaften Variante ist die äussere Hülle als Standard-Frachtcontainer (ISO-Container) ausgeführt.

Ein erfindungsgemässes Montageset zum Aufbau einer erfindungsgemässen modularen Anlage umfasst mehrere erfindungsgemässe Module und ein oder mehrere Zugelemente. Besonders vorteilhaft weist ein solches Montageset eine Mehrzahl von Verbindungselementen auf, mit welchen die Befestigungspunkte der Module verbunden werden können.

### Kurze Beschreibung der Zeichnungen

Zum besseren Verständnis der vorliegenden Erfindung wird nachfolgend auf die Zeichnungen Bezug genommen. Diese zeigen lediglich Ausführungsbeispiele des Erfindungsgegenstands, und sind nicht dazu geeignet, die Erfindung auf die hierin offenbarten Merkmale zu beschränken.

In den nachfolgenden Figuren und der dazugehörigen Beschreibung sind gleiche oder gleich wirkende Teile mit den gleichen Bezugszeichen versehen. Module sind lediglich schematisch als Quader oder als verrundete Kuben dargestellt.
- Figur 1: zeigt schematisch eine mögliche Ausführungsform einer erfindungsgemässen modularen Anlage, (a) in Vorderansicht , (b) in Seitenansicht von links, und (c) in Draufsicht.
- Figur 2: zeigt schematisch einen Querschnitt durch die Verbindungsstelle zwischen zwei Modulen (Detail A in der erfindungsgemässen modularen Anlage aus Figur 1).
- Figur 3: zeigt schematisch einen Querschnitt durch die Verbindungsstelle zwischen einem Modul der obersten Lage und einer Spannvorrichtung (Detail B in der erfindungsgemässen modularen Anlage aus Figur 1).
- Figur 4: zeigt schematisch eine mögliche Ausgestaltung der Tragstruktur eines Funktionsmoduls und eines Zwischenmoduls einer erfindungsgemässen modularen Anlage wie in Figur 1 gezeigt, in Seitenansicht von links.
- Figur 5: zeigt schematisch eine weitere mögliche Ausführungsform einer erfindungsgemässen modularen Anlage, mit senkrecht ausgerichteten Modulen, (a) in Vorderansicht, und (b) in Seitenansicht von links.
- Figur 6: zeigt zwei verschiedene Ansichten (a), (b) eines dreidimensionalen Models einer weiteren Ausführungsform einer erfindungsgemässen modularen Anlage.
- Figur 7: zeigt eine schematische Darstellung einer anderen Ausführungsform einer erfindungsgemässen modularen Anlage in perspektivischer Sicht.
- Figur 8: zeigt eine schematische Darstellung noch einer anderen Ausführungsform einer erfindungsgemässen modularen Anlage in perspektivischer Sicht.
- Figur 9: zeigt eine schematische Darstellung einer weiteren Ausführungsform einer erfindungsgemässen modularen Anlage in perspektivischer Sicht.
- Figur 10: zeigt eine schematische Darstellung noch einer weiteren Ausführungsform einer modularen Anlage in perspektivischer Sicht.
- Figur 11: zeigt ebenfalls eine schematische Darstellung einer alternativen Ausführungsform einer modularen Anlage in perspektivischer Sicht.
- Figur 12: zeigt schematisch zwei mögliche Varianten einer horizontal formschlüssigen Lagerung von Funktionsmodulen in perspektivischer Sicht, (a) mit Verbindungsbolzen in einem konischen Lagerelement, und (b) mit umgreifenden seitlichen Halterungen. Teile der Module sind in der Figur weggeschnitten, um die Ausführung der Lagerung sichtbar zu machen.

### Ausführung der Erfindung

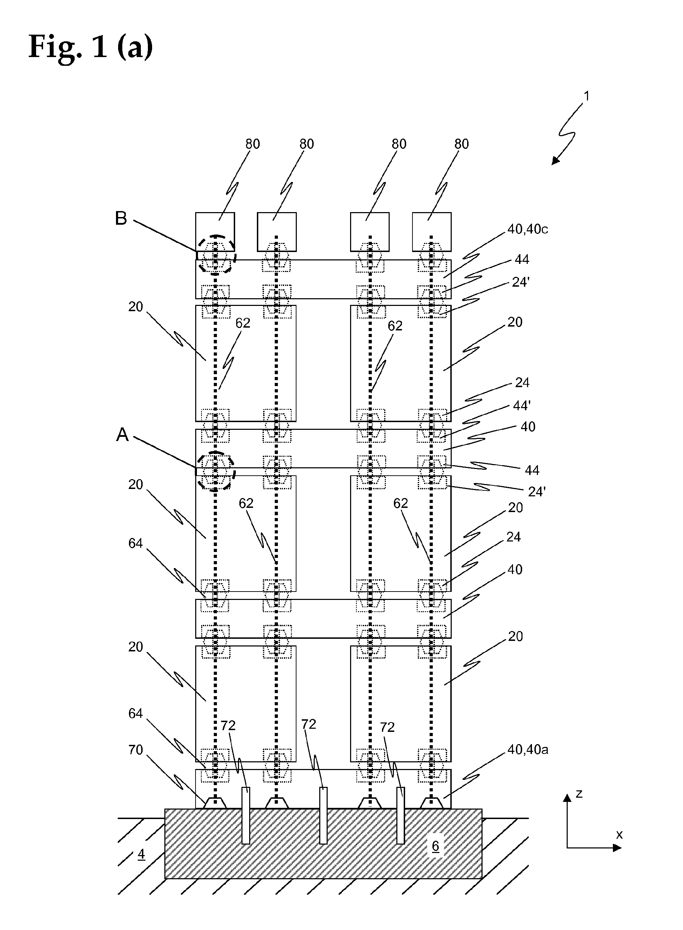

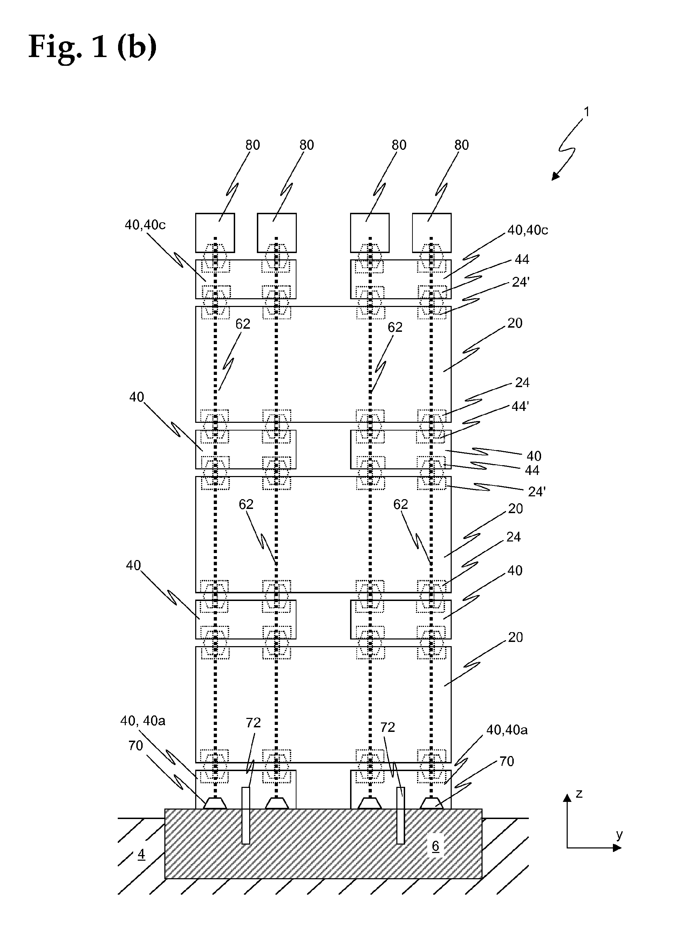

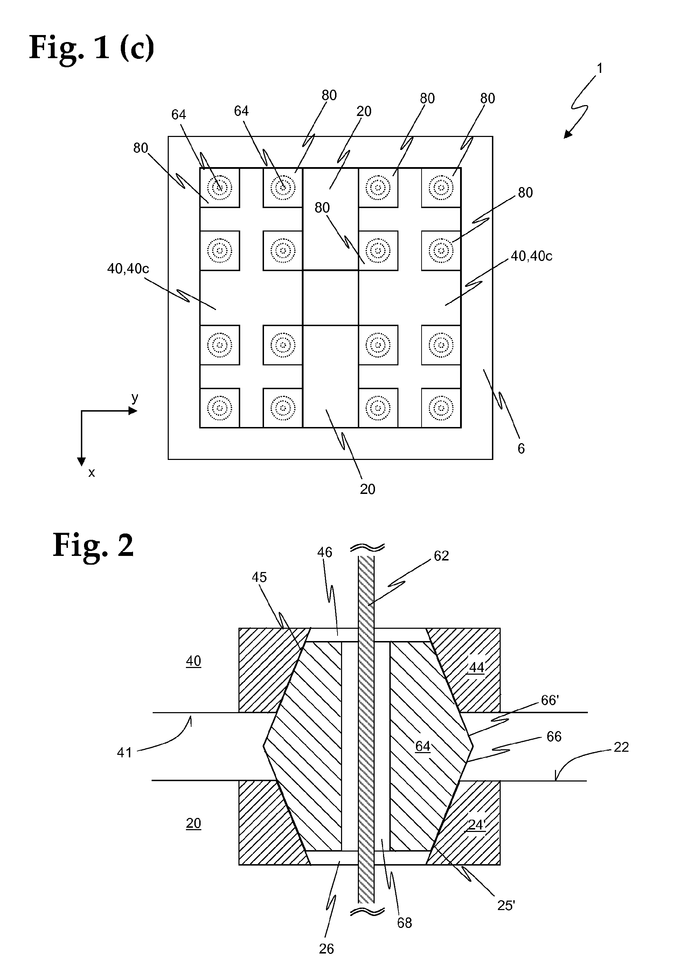

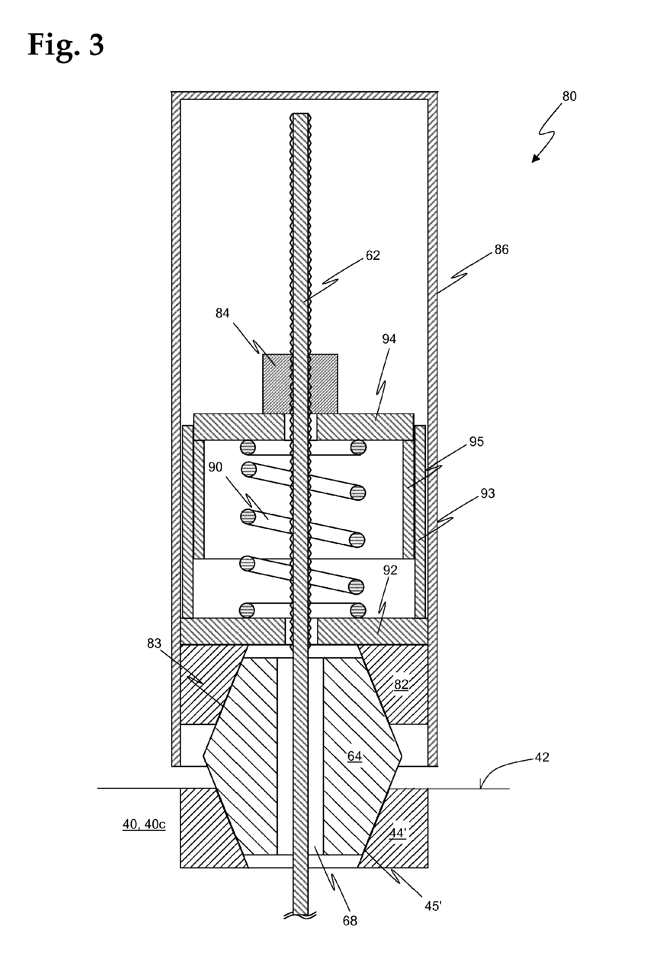

Eine mögliches Ausführungsbeispiel einer erfindungsgemässen modularen Anlage 1 ist in Figur 1 schematisch dargestellt. Die verschiedenen Verbindungsstellen sind in den Figuren 2 und 3 schematisch gezeigt. Die modulare Anlage 1 besteht aus sechs Funktionsmodulen 20 und acht Zwischenmodulen 40, die verschränkt gestapelt auf einem gemeinsamen Fundamentsockel 6 angeordnet sind. Die in den Figuren nur schematisch gezeigten Funktionsmodule 20 und Zwischenmodule 40 haben die äussere Form eines Kubus, und bestehen aus einer Tragstruktur und den in den einzelnen Modulen vorhandenen Anlagenelementen. Auf den Aufbau der Module wird weiter unten noch eingegangen. Für die Erläuterung des Funktionsprinzip der erfindungsgemässen modularen Anlage ist es soweit ausreichend, die Module als steife, zug- und druckfeste kubische Elemente zu betrachten.

Die Module 20, 40 weisen auf der Oberseite und der Unterseite je acht Lagerelemente 24, 24' , 44, 44' auf, in welchen Verbindungselemente 64 angeordnet sind (in Figur 1 nur schematisch angedeutet), welche die Module zueinander zentrieren und in der waagrechten Ebene formschlüssig fixieren. Aufgrund ihrer Anordnung sind übereinander liegende Verbindungselemente entlang der Senkrechten (Lot-Achse) gefluchtet angeordnet. In senkrechter Richtung verlaufen durch alle Module 20, 40 und Verbindungselemente 64 hindurch Zugelemente 62, mit welchen die Module in senkrechter Richtung gegeneinander verspannt sind.

Die Verbindungselemente 64 haben im gezeigten Beispiel die Form eines spiegelsymmetrischen doppelten Kegelstumpfs mit zwei konischen Mantelflächen 66, 66' und einem Durchloch 68 zur Durchführung des im gezeigten Ausführungsbeispiel als Zugstange realisierten Zugelements 62.

Andere Formgebungen wären auch möglich, beispielsweise Pyramidenstümpfe. Jedoch hat die doppelte konische Formgebung den Vorteil, dass sich das Verbindungselement automatisch im ebenfalls konischen Lagerelement zentriert. Zudem werden beim abschliessenden Spannen der Zugelemente die konischen Verbindungselemente derart in die ebenfalls konischen Lageraufnahmen gepresst, dass bereits dadurch eine erhebliche mechanische Stabilität entsteht. Weiter ist es bei der gezeigten konischen Form unwichtig, welche Seite des Doppelkegelstumpfes unten liegt, und welche oben, und welche Winkelposition gegeben ist, was die Montage erleichtert. Die Verbindungselemente werden vorteilhaft aus geschmiedetem Stahl gefertigt.

Die Zugelemente 62 verlaufen zwischen Zugstangenankern 70 in der untersten Lage Zwischenmodule 40, 40a senkrecht durch alle Module 20, 40 und Verbindungselemente 64 hindurch zu Spannvorrichtungen 80 oberhalb der obersten Lage Module 40, 40c. Die Zugelemente können wie im gezeigten Beispiel als Zugstangen ausgeführt sein, insbesondere als einteilige Zugstangen, oder als aus zwei oder mehr Teilen zusammengesetzte Zugstangen. Solche Zugstangen können beispielsweise aus Stahl gefertigt sein, oder anderen geeigneten Materialien, beispielsweise Kohlefasern. Anstatt Zugstangen können auch Zugseile verwendet werden, wobei Zugseile jedoch wegen der statischen Anwendung keinen Mehrwert bieten, und Zugstangen aufgrund der einfacheren Fertigung und Montage vorteilhaft sind. Ebenso ist es möglich, mehrere parallel geführte Zugstangen oder Drahtseile als Zugelement zu verwenden.

Die Funktionsmodule 20 und die Zwischenmodule 40 weisen auf der Unterseite 21, 41 Lagerelemente 24, 44 mit konischen Mantelflächen 25, 25', 45, 45' und zentralen Öffnungen 26, 46 auf, in denen die Verbindungselemente 64 angeordnet werden. Identische Lagerelemente 24', 44' sind auf der Oberseite 22, 42 angeordnet. Diese Lagerelemente sind vorteilhaft aus einem geeigneten metallischen Werkstoff gefertigt, und mit der Tragstruktur (nicht dargestellt) des Moduls 20 stabil verbunden.

Die Verbindung zwischen zwei Modulen 20, 40 wird in Figur 2 gezeigt (Detail A in Figur 1). Das Verbindungselement 64 ist in einem Lagerelement 24' auf der Oberseite 22 eines Funktionsmoduls 20 angeordnet, und liegt mit der unteren konischen Mantelfläche 66 auf der konischen Mantelfläche 25' des Lagerelements 24' auf. Auf der Unterseite 41 des darüber angeordneten Zwischenmoduls 40 liegt ein Lagerelement 44 mit der konischen Mantelfläche 45 auf der oberen konischen Mantelfläche 66' des Verbindungselements 64 auf. Die Zugstange 62 verläuft, von der Ankervorrichtung her kommend durch die zentrale Öffnung 26 des Lagerelements 24, durch das Durchloch 68, und durch die zentrale Öffnung 46 des Lagerelements 44, hin zur Spannvorrichtung am oberen Ende der Anlage.

Die Zwischenmodule 40, 40a der untersten Lage liegen direkt oder indirekt auf einem Betonfundament 6 auf, und sind mit geeigneten Fundamentankern 72 im Fundamentsockel 6 formschlüssig befestigt. Bei der Montage der Module 40, 40a der untersten Lage müssen gegebenenfalls Distanzelemente verwendet werden, um eine dauerhaft korrekte waagrechte Orientierung der Module auf dem Fundamentsockel sicherzustellen. In den Modulen der untersten Lage sind Zugstangenanker 70 (in der Figur 1 nur schematisch angedeutet) angeordnet, an denen die Zugstangen 62 befestigt werden. Die kann beispielsweise eine Mutter sein, die auf ein endständiges Aussengewinde der Zugstange aufgeschraubt wird. Jedoch sind dem Fachmann auch verschiedene andere Möglichkeiten bekannt, eine Zugstange reversibel in einer Struktur zu verankern.

Alternativ zur Verankerung der Zugstangen in den Modulen der untersten Lage, und der separaten Verankerung dieser Module im Fundament, wäre auch eine direkte Verankerung der Zugstangen im Fundamentblock 8 möglich. Diese Variante erfordert jedoch die Anbringung von Ankervorrichtungen und Lagerelementen im Fundament, die entsprechend präzis ausgerichtet werden müssen, und ist entsprechend aufwendiger. In einer solchen Ausführungsvariante kann im Prinzip der Fundamentblock 8 als unterstes Modul behandelt werden.

Auf der Oberseite der obersten Lage Zwischenmodule 40, 40c sind Spannvorrichtungen 80 angeordnet, welche dazu dienen, die Zugspannung der Zugelemente über einen weiten Temperaturbereich in einem bestimmten Toleranzbereich zu halten. Dies ist besonders von Bedeutung, weil die erfindungsgemässen modularen Anlagen der Witterung ausgesetzt sind, und entsprechend starken Temperaturschwankungen unterliegen können. Bei einem Längenausdehnungskoeffizienten von Stahl bei Raumtemperatur von ca. 10⁻⁵ K⁻¹ führt dies bei einer Temperaturänderungen von 50 °C, wie sie beispielsweise in Wüstengebieten innerhalb eines Tagesablaufs eintreten können, bei einer unbelasteten Zugstange aus Stahl mit einer Länge von 20 Metern zu einer Längenänderung von 10 mm. Eine Zugstange wirkt in einem geringen Dehnungsbereich als sehr steife Zugfeder mit im wesentlichen konstanter Federkonstante. Wird eine Zugstange wie normalerweise üblich direkt gespannt, so dass die resultierende Zugkraft linear von der Dehnung der Zugstange abhängt, so führt eine solche Längenveränderung zu einem erheblichen Abfall bzw. zu einer erheblichen Zunahme der Zugspannung. Dies führt im Extremfall dazu, dass gar keine Zugspannung mehr anliegt, oder der Wert im einem zu hohen Bereich liegt, der zu Schäden an der Zugstange führen kann. Beispielsweise würde bei einer 20 mm gedehnten Zugstange von ursprünglich 20 m Länge eine Längenabnahme von -10 mm zu einer ca. 50% höheren Zugkraft führen, bzw. bei einer Längenzunahme von +10 mm zu einer ca. 50% geringeren Zugkraft.

Die Spannvorrichtung in Figur 3 löst dieses Problem, indem ein zusätzliches Federelement 90, im dargestellten Ausführungsbeispiel als Druckspiralfeder realisiert, eine positive oder negative Längenänderung der Zugstange 62 ausgleicht. Im gespannten Zustand entspricht die Kraft der Druckfeder 92 der entgegen gesetzten Zugkraft der als Zugfeder wirkenden Zugstange. Die Federkonstante D2 der Druckfeder 90 ist dabei so gewählt, dass diese erheblich geringer ist das die Federkonstante D1 der Zugstange, d.h. die Druckfeder ist weicher. Bei einer Verkürzung bzw. Verlängerung der Zugstange aufgrund von Temperaturänderungen gleicht dann die gleichzeitig komprimierte bzw. expandierte Druckfeder einen Grossen Teil des Effekts der Längenänderung aus. Für die seriell angeordneten Federelemente resultiert eine Federkonstante D des gesamten Systems von 1/D = (1/D1 + 1/D2). Beträgt das Verhältnis der Federkonstanten beispielsweise D1/D2=9/1, dann beträgt die Federkonstante des Gesamtsystems noch 90% von D2, bzw. 10% von D1. Verkürzt bzw. verlängert sich nun die Zugstange aufgrund einer Temperaturabnahme, so beträgt die Zunahme bzw. Abnahme der Zugkraft nur ca. 10% des Wertes gegenüber einem System nur mit Zugstange, ohne Feder. Auf diese Weise verbleiben die Werte der Zugkraft bei geeigneter Wahl der Federkonstanten auch bei extremen Temperaturänderungen in einer vergleichsweise schmalen Bandbreite.

Ein weiterer Vorteil einer erfindungsgemässen modularen Anlage mit solchen Spannvorrichtungen ist das Verhalten bei Erdbeben. Bei heftigen Erdbeben ist es möglich, dass die gesamte modulare Anlage nach oben beschleunigt wird, und daraufhin wieder nach unten sackt, was einer negativen Beschleunigung entspricht. Beim letzteren wirken die Beschleunigungskräfte nicht über die Tragstruktur der Anlage, sondern über die Zugstangen. Die Druckfeder gleicht auch in solch einem Fall diese Belastung aus, und sorgt für einen sicheren Zusammenhalt der Module auch bei negativer Beschleunigung.

Das gezeigte Ausführungsbeispiel einer Spannvorrichtung 80 ist mit einem konischen Lagerelement 82 auf einem Verbindungselement 64 aufgesetzt, welches wiederum auf einem Lagerelement 44' eines Zwischenmoduls 40, 40c aufliegt, analog zu der Verbindung zwischen den Modulen 20, 40 wie oben stehend beschrieben. Auf dem Lagerelement 82 ist eine erste Auflagescheibe 92 mit einer zentralen Öffnung und einer Hülse 93 angeordnet, auf der die Druckfeder 90 aufliegt. Die genannte Auflagescheibe 92 ist in geeigneter Weise mit dem Lagerelement 82 verbunden, beispielsweise mittels Schrauben (nicht dargestellt). Auf der Oberseite der Druckfeder liegt eine zweite Auflagescheibe 94 mit einer zentralen Öffnung und einer Hülse 95 auf. Die ineinander liegenden Hülsen 93, 95 dienen bei der Expansion/Kompression der Druckfeder als Führung. Die Zugstange 62 weist an ihrem oberen Ende ein Aussengewinde auf. Auf diesem ist eine Mutter 84 aufgeschraubt, welche die Zugkraft der Zugstange 62 auf die zweite Auflagescheibe 94 und damit auf die Druckfeder 90 überträgt. Ein demontierbares Gehäuse 86 schützt die Spannvorrichtung vor Witterungseinflüssen.

Anstatt einzelner Elemente könnten Verbindungselement 64 und Lagerelement 82 auch einstückig ausgeführt sein. Ebenso kann bei geeigneter Dimensionierung des Lagerelements 82 bzgl. der darauf abstützenden Druckfeder 90 auf die Auflagescheibe 92 verzichtet werden. Anstatt mit einer Druckfeder kann das Federelement einer Spannvorrichtung auch mit einer Zugfeder realisiert werden, welche oberhalb der Zugstange angeordnet wird. Ebenfalls möglich ist die Verwendung mehrerer Druckfedern, oder gestapelter Tellerfedern.

Bei der Montage einer modularen Anlage müssen die Zugstangen mit geeigneten Mitteln auf die gewünschte Zugkraft gespannt werden. Anschliessend hält die Spannvorrichtung 80 diese Spannung aufrecht. In Figur 3 befindet sich die Druckfeder 90 bereits in komprimiertem Zustand bei gespannter Zugstange. Dazu müssen jedoch vorgängig sowohl Zugstange 62 als auch Druckfeder 90 gespannt worden sein. Dies kann separat geschehen, indem beispielsweise mit einer geeigneten externen Vorrichtung die Druckfeder 90 auf einen bestimmten Druckkraftwert komprimiert wird, und anschliessend bei der noch unbelasteten Zugstange 62 die Mutter 84 bündig auf die zweite Auflagescheibe 94 aufgeschraubt wird. Nach dem Entfernen der äusseren Krafteinwirkung auf die Druckfeder expandiert diese, und spannt dabei gleichzeitig die Zugstange, bis das Gleichgewicht erreicht ist, bei welchem die Kräfte der Druckfeder und der Zugstange identisch sind. Alternativ können Zugstange und Druckfeder auch gleichzeitig gespannt werden. Dazu kann beispielsweise auf der Zugstange 62 oberhalb der Mutter 84 eine Hydraulikvorrichtung angebracht werden, welche nach unten auf die Druckfeder wirkt. Dabei spannt die Hydraulikvorrichtung gleichzeitig die Druckfeder und die Zugstange, bis die gewünschte Zugspannung erreicht ist. Anschliessend wird die Mutter 84 bündig auf die zweite Auflagescheibe geschraubt, so dass beim Entfernen der Hydraulikvorrichtung die Zugspannung erhalten bleibt.

Anstatt eines Federelementes können auch hydraulische Mittel vorgesehen sein, um eine Längenänderung der Zugstange auszugleichen, oder pneumatische Federn, wobei letztere bei wechselnden Temperaturen wenig vorteilhaft sind. Ebenfalls möglich sind Kombinationen von hydraulischen Kolben und Federsystemen. Die Spannvorrichtung kann zusätzlich auch Dämpfungselemente aufweisen, um Schwingungen im statischen System vermeiden.

In einer vorteilhaften alternativen Ausführungsvariante ist das Federelement zwischen dem Zugstangenanker und dem Modul der untersten Lage angeordnet, was funktionell zur oben stehend diskutierten Spannvorrichtung identisch ist. Jedoch wird die Zugstange weiterhin von der oberen Seite her gespannt. Eine solche Variante hat den Vorteil, dass die Federelemente platzsparend in den Modulen 40a der untersten Lage untergebracht werden können.

Die Anlagenmodule 20, 40 einer erfindungsgemässen modularen Anlage 1 müssen für den Einsatz als statisches Element der Anlagenstruktur neben den oben stehend bereits erwähnten Merkmalen und kompatiblen Aussenmassen lediglich die statischen Funktionen wahrnehmen können. Ansonsten können die Module 20, 40 beliebig an die vorgesehenen Einsatzzwecke angepasst sein. Die statischen Funktionen beinhalten zum einen das Aufnehmen der Last entlang den Zugelemente, und zum anderen eine ausreichende Steifigkeit und mechanische Stabilität.

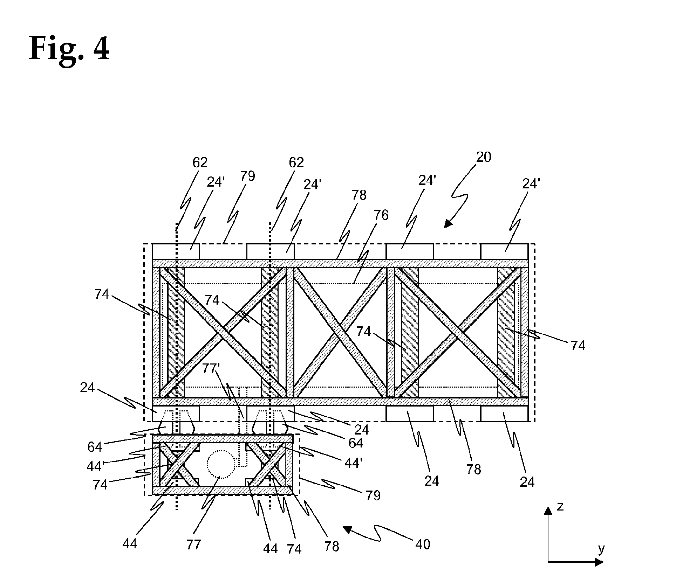

In Figur 4 sind die statischen Bauelemente eines Funktionsmoduls 20 und eines Zwischenmoduls 40 gezeigt, wie sie in Figur 1 (b) dargestellt sind. Die anderen Module 20, 40 sind der besseren Übersichtlichkeit halber weggelassen. Das Funktionsmodul 20 und das Zwischenmodul 40 umfasst jeweils eine Tragstruktur 78 in Form eines Gitterrahmens. Mit dieser stabil verbunden sind acht Tragsäulen 74, die zwischen den Lagerelementen 24, 24' angeordnet sind. Jede Tragsäule weist über ihre gesamte Länge einen Hohlraum auf (nicht dargestellt), durch welche die Zugstange 62 geführt ist.

Im fertig montierten Zustand der modularen Anlage nehmen die Tragsäulen der Module, sowie die zwischen den übereinander liegenden Modulen angeordneten Lagerelemente und Verbindungselemente, das Gewicht der Anlage auf und leiten es ins Fundament. Die Tragstruktur 78 eines Moduls wiederum trägt die verschiedenen Vorrichtungen und Anlagenelemente etc., die zu einem bestimmten Modul gehören, und versteift gleichzeitig das Modul. Durch die wechselweise längs und quer angeordneten Module der verschiedenen Lagen wird schliesslich die modulare Anlage als ganzes versteift.

Anstatt über Tragsäulen können Module einer erfindungsgemässen modularen Anlage das Gewicht der darüber liegenden Module und die Zugkraft der Zugstangen auch über die Tragstruktur selber aufnehmen, was entsprechend stabiler dimensionierte Tragstrukturen erfordert.

Die Aussenhülle 79 des Funktionsmoduls 20, bzw. des Zwischenmoduls 40, hat keine direkte statische Funktion, und dient vor allem als Witterungsschutz. Die Aussenhülle kann entsprechend ohne Beeinträchtigung der Stabilität auch weggelassen werden. Für den Fall, dass die Aussenmasse der Module kompatibel zu Standardfrachtcontainern (ISO-Container) gewählt sind, um den effizienten Transport mittels Lastwagen, Bahn und Frachtschiff zu ermöglichen, können die entsprechenden Halterungsvorrichtungen etc. an dieser Aussenhülle angebracht werden, beispielsweise die üblichen Halterungsecken (engl. "corner castings"). Die Aussenhülle kann in einem solchen Fall der Struktur eines herkömmlichen Frachtcontainers entsprechen, beispielsweise einem 20-Fuss-, 40-Fuss- oder 45-Fuss-Container, wobei die Aussenhülle in einem solchen Fall nur während des Transports eine statische Funktion erfüllt. Die Dimensionierung der Anlagenmodule ist jedoch keineswegs auf solche Containerformate beschränkt. Die Module können auch kleinere oder grössere Dimensionen aufweisen.

Innerhalb eines Moduls sind die Anlagenelemente etc. des Moduls angeordnet, die sich je nach Modul unterscheiden können. Im gezeigten Beispiel ist im Funktionsmodul 20 innerhalb der Tragstruktur 78 ein schematischen grösseres Anlagenelement 76 angeordnet. Dies kann beispielsweise eine Maschine, ein Tank, ein Stromgenerator, ein Wärmetauscher oder ein chemischer Reaktor sein. Es können auch begehbare Steuerungseinrichtungen, Aufenthaltsräume etc. vorgesehen sein. Dies sind jedoch lediglich Beispiele zur Illustration. Sollte aus statischen Gründen ein zusätzliches Funktionsmodul benötigt werden, ohne das in diesem Anlagenelemente angeordnet sind, so kann ein solches Funktionselement auch nur aus einer nackten Tragstruktur bestehen. In einem solchen Fall ist es jedoch vorteilhafter, das entsprechende Modul als Transportmodul auszugestalten, in welchem während dem Transport der modularen Anlage Material transportiert werden kann, beispielsweise Verbindungselemente oder Zugstangensegmente.

Im Zwischenmodul 40, das eine geringere Höhe als das Funktionsmodul 20 aufweist, können Leitungen 77, Kabelschächte u.ä. angeordnet sein, um verschiedene Module operativ miteinander zu verbinden. Im Figur 4 ist beispielhaft eine in Längsrichtung des Zwischenmoduls 40 angeordnete Leitung 70 gezeigt, welche über eine weitere Leitung 77' mit dem Anlagenelement 76 des darüberliegenden Funktionsmoduls 20 verbunden ist. Naheliegenderweise kann eine Verbindung der Leitungsteile innerhalb der Module 20, 40 erst nach der Montage der gesamten modularen Anlage erstellt werden. Da sich ein Grossteil der Leitungen, Kabel etc. innerhalb der Module befindet, beschränken sich diese Verbindungsarbeiten jedoch auf den Einbau kurzer Verbindungsstücke, bzw. das Zusammenschliessen von Kabeln.

Im bisher gezeigten Ausführungsbeispiel wurden zwei Grundtypen von Modulen kombiniert, die sich in den relativen Aussenmassen unterscheiden. Der Vorteil der nur einen Drittel der Höhe der Funktionsmodule 20 aufweisenden Zwischenmodule 40 ist, dass für den Transport drei solche Module gestapelt und temporär zu einer Einheit verbunden werden können, mit im wesentlichen gleichen Aussenmassen wie die Funktionsmodule.

Es ist jedoch im Rahmen der Erfindung auch möglich, eine modulare Anlage mit Modulen mit einheitlichen Massen aufzubauen, d.h. eine Anlage nur mit Funktionsmodulen. Ebenso ist es möglich, mehr als zwei Modulformate zu verwenden, solange eine erfindungsgemässe Stapelung und Verspannung möglich ist.

Für gewisse Industrieanlagen sind Anlageteile notwendig, die sehr hoch sind im Vergleich zur Grundfläche, beispielsweise Destillationskolonnen, Rauchgasreinigungsanlagen, Silos, etc. Solche Anlageteile lassen sich nicht in die bisher gezeigten Module verbauen. Jedoch ist es möglich, solche Anlageteile in Module zu verbauen, welche waagrecht transportiert werden können, und in der modularen Anlage schliesslich hochkant stehend verbaut werden.

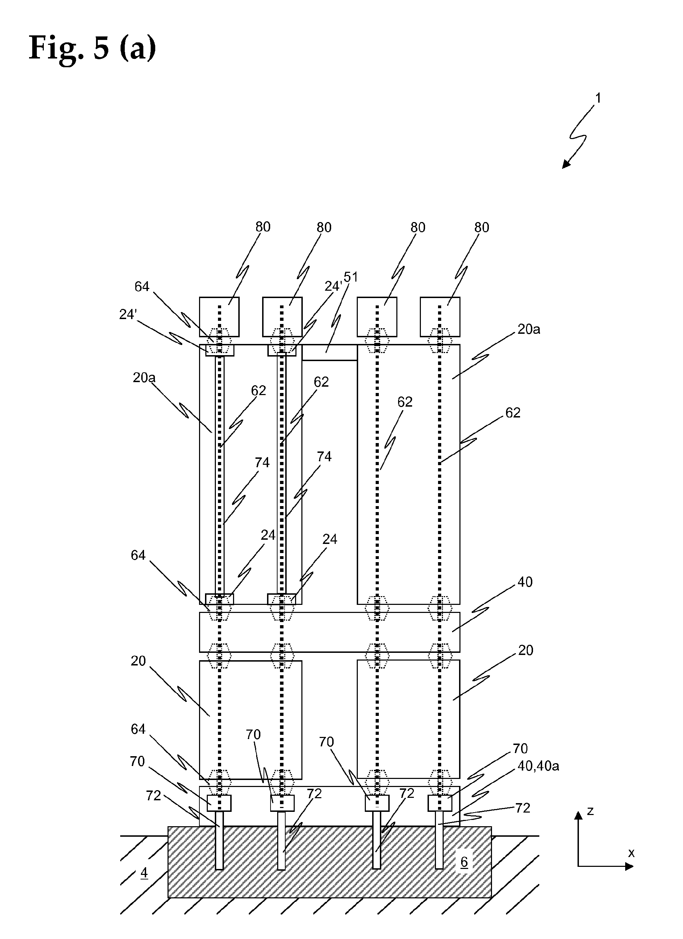

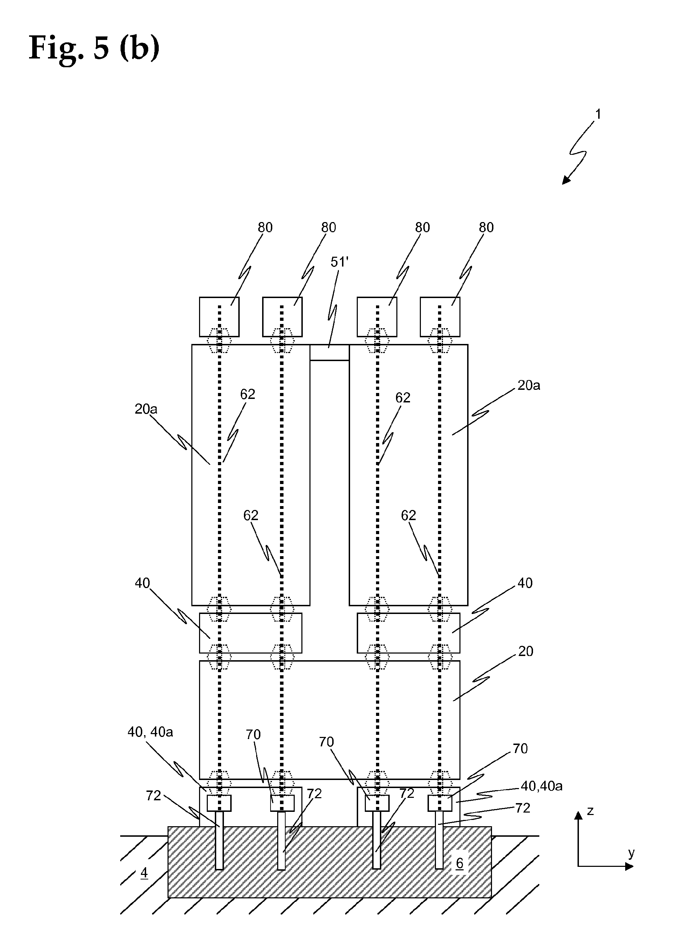

Eine solches Ausführungsbeispiel einer erfindungsgemässen modularen Anlage ist in Figur 5 dargestellt. Die ersten drei Lagen Module 40a, 20, 40 sind identisch zu Figur 1. Auf der zweiten Lage von Zwischenmodulen 40 jedoch sind vier Hochmodule 20a angeordnet, welche wiederum auf einer unteren Seite und einer oberen Seite je vier Lagerelemente 24, 24' aufweisen (nur in Figur 5(a) im linken Modul 20a schematisiert dargestellt), zur Aufnahme der Verbindungselemente 64. Zwischen den Lagerelementen 24, 24' sind Tragsäulen 74 angeordnet.

Zur Stabilisierung der Hochmodule können auf der Oberseite zwei Lagen verschränkt angeordnete Module angeordnet sein. Sind diese der Stabilisierung dienenden Module jedoch störend, beispielsweise bei einem nach oben offenen Hochmodul, so können stattdessen wie im gezeigten Ausführungsbeispiel zwischen benachbarten Hochmodulen 20a Querverstrebungen 51, 51' angebracht werden.

Für den Transport können die Module 20a auf eine definierte untere Seite abgelegt werden, so dass die Lagerelemente 24, 24' an den Stirnseiten des Moduls liegen. Auf diese Weise ist es insbesondere möglich, ein Hochmodul mit der Aussenhülle eines Standardfrachtcontainers zu versehen, wobei im montierten Zustand die längsseitigen Enden des Containers die Oberseite und Unterseite des Hochmoduls bilden.

Im Ausführungsbeispiel in Figur 5 ist weiter eine alternative Befestigung der Anlage 1 auf dem Fundament 6 gezeigt. Anstatt die Fundamentanker an der Tragstruktur der unteren Module 40a zu befestigen, wie in Figur 1 dargestellt, sind diese in der Verlängerung der Zugelemente 62 und Zuganker 70 angeordnet, so dass mechanische Kräfte beispielsweise während eines Erdbebens direkt vom Untergrund 4 über 0das Fundament 6 auf die Zugelemente 62 übertragen werden.

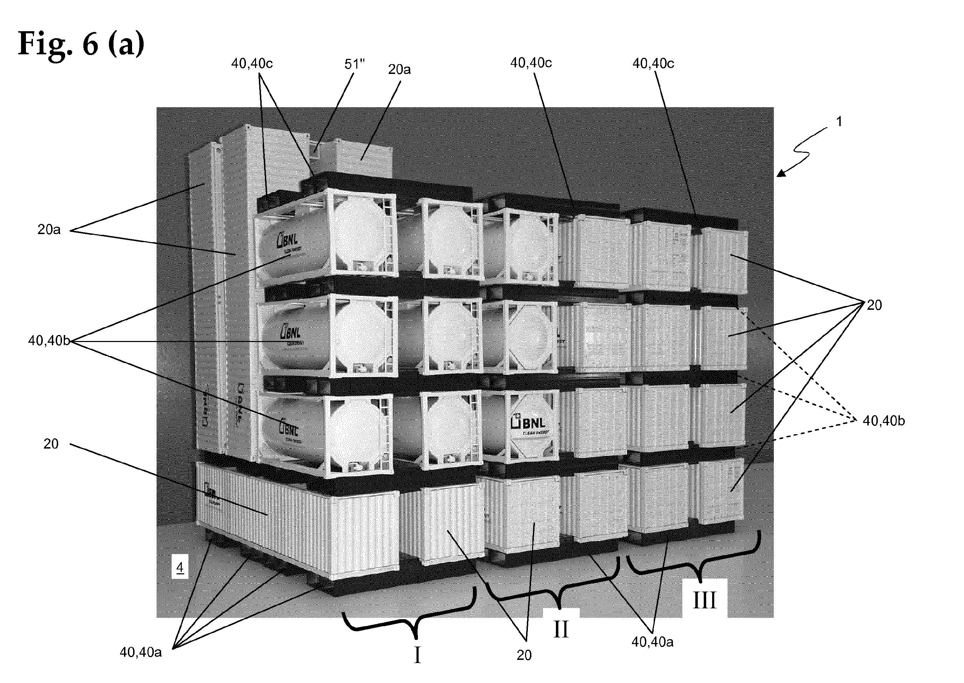

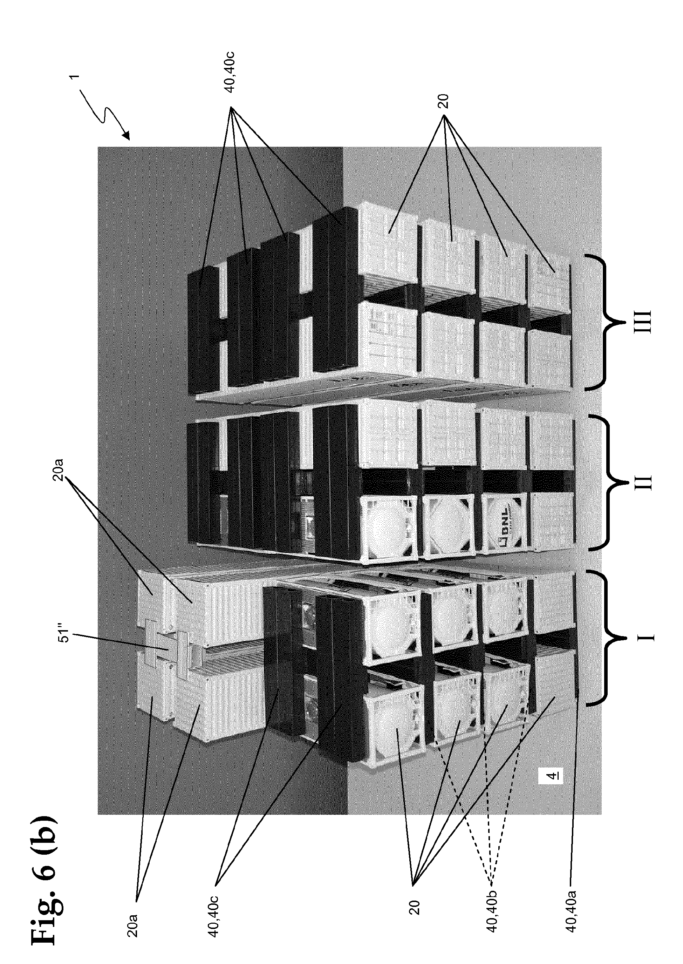

In einer weiteren möglichen Ausgestaltungsform einer erfindungsgemässen modularen Anlage sind die Zwischenmodule 40 derart ausgestaltet, dass jeweils vier Zwischenmodule in einen herkömmlichen Standardtransportcontainer passen. Die Funktionscontainer wiederum haben das Format herkömmlicher 20-Fuss- bzw. 40-Fuss-Container. Ein Modell einer solchen erfindungsgemässen modularen Anlage 1 ist in den Figuren 6(a) und (b) in zwei verschiedenen Ansichten abgebildet. Die dargestellte Anlage besteht aus drei separaten Blöcken I, II, III. Beispielhaft besteht der Block I in einer untersten Lage aus vier Zwischenmodulen 40a, welche mit dem Fundamentblock (nicht dargestellt) fest verbunden sind. Auf dieser untersten Lage sind rechtwinklig dazu zwei Funktionsmodule 20 in der äusseren Hülle eines 40-Fuss-Frachtcontainers angeordnet. Diese Funktionsmodule weisen entsprechend sechzehn Lagerelemente auf der Oberseite und auf der Unterseite auf, sowie dazwischen liegend sechzehn Tragsäulen. Nach einer weiteren Lage mit vier Zwischenmodulen 40, 40b folgen auf einer vorderen Seite des Blocks I wechselweise drei Lagen Funktionsmodule 20 in der äusseren Form eines 20-Fuss-Tankcontainers, sowie Zwischenmodule 40. Die Spannvorrichtungen sind im gezeigten Beispiel in die Zwischenmodule 40, 40c der obersten Lage integriert. Auf einer hinteren Seite des Blocks I sind vier Hochmodule 20a angeordnet. Die Spannvorrichtungen sind in die Oberseite der Hochmodule 20 integriert. Zur Stabilisierung der Hochmodule 20a sind die vier Module durch ein zentrales Querstrebenelement 51" verbunden, welches alle vier Hochmodule 20a steif verbindet.

Da die Länge und Breite der Zwischenelemente 40 geringer ist als diejenige der Funktionsmodule 20, resultiert beim gezeigten Ausführungsbeispiel eine dichtere, platzsparendere Bauweise als beispielsweise in Figur 1 dargestellt.

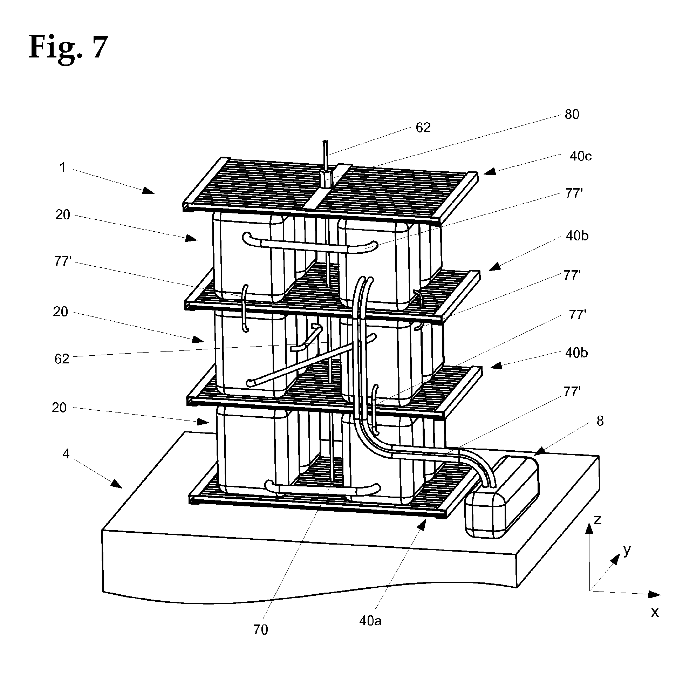

Eine weitere mögliche Ausgestaltungsform einer erfindungsgemässen modularen Anlage 1 ist in Figur 7 dargestellt. Die Anlage 1 verfügt über zwölf Funktionsmodule 20 (schematisiert dargestellt als abgerundete Kuben), die verteilt auf drei vertikal übereinander (d.h. in z-Richtung) liegenden Anlagenebenen im Wesentlichen parallel (x/y-Ebene) zur Oberfläche des Untergrunds 4 angeordnet sind. In der dargestellten Ausführungsbeispiel befinden sich vier Funktionsmodule 20 einer unteren Anlagenebene auf einem Grundträger-Modul 40a, dass wiederum in geeigneter Weise auf dem Untergrund 4 angeordnet ist, beispielsweise auf einem oder mehreren Fundamentblöcken (nicht dargestellt). Die vier Funktionsmodule 20 der unteren Anlagenebene haben eine im Wesentlichen identische Höhe. Auf ihnen ist ein Zwischenträger-Modul 40b angeordnet, auf dessen Oberseite wiederum vier Funktionsmodule 20 in einer mittleren Anlagenebene angeordnet sind. Auf den Funktionsmodulen 20 der mittleren Anlagenebene befindet sich ein weiteres Zwischenträger-Modul 40b, auf dem vier Funktionsmodule 20 auf einer oberen Anlagenebene angeordnet sind. Aufliegend auf der Oberseite der vier Funktionsmodule 20 der oberen Anlagenebene ist schliesslich ein Deckträger-Modul 40c vorgesehen.

Ein zentrales Zugelement 62 erstreckt sich senkrecht in z-Richtung von einem im Untergrund 4 befestigten Anker (nicht dargestellt) durch entsprechende Öffnungen der Module 40a, 40b, 40c hindurch über alle Anlagenebenen bis zum Deckträger-Modul 40c. Das Zugelement 62 befindet sich dazu im Wesentlichen im Mittelpunkt der jeweiligen Anlagenebenen, d.h. sie hat jeweils ungefähr dieselbe Distanz zu den vier Funktionsmodulen 2 einer Anlagenebene, so dass eine symmetrische Kraftverteilung resultiert.

Als Zugelement 62 können wie bei den vorangegangenen Ausführungsvarianten eine einzelne Zugstange oder mehrere parallele Zugstangen aus Stahl oder Kohlefasern, oder ein oder mehrere parallele Drahtseile dienen. Ebenso kann ein Zugelement aus mehreren gleichartigen oder unterschiedlichen seriell aneinander gehängten Einzelelementen bestehen.

Alternativ oder zusätzlich ist auch eine Befestigung des Zugelements 62 am Grundträger-Modul 40a möglich. In solchen Ausführungsformen der Erfindung kann die Verankerung der gesamten Anlage durch eine geeignete Verankerungen des Grundträger-Moduls 40a im Untergrund 4 erfolgen.

Im Bereich seines oberen Endes steht das Zugelement 62 in mechanischer Wirkverbindung mit einer Spannvorrichtung 80, welches das Zugelement 62 mit einer Zugkraft beaufschlagt. Aufgrund dieser Zugkraft sind die verschiedenen Zwischenmodule 40, 40a, 40b und die Funktionsmodule 20 in senkrechter Richtung so gegeneinander verspannt, dass auch ohne Verschraubungen oder ähnlichem die Module 20, 40a, 40b, 40c stabil zusammenhalten.

Die Spannvorrichtung 80 ist im gezeigten Ausführungsbeispiel auf dem Deckträger-Modul 40c angebracht. kann jedoch auch im Innern oder unterhalb des Deckträger-Moduls 40c angeordnet sein.

Deckträger-Modul 40c, Zwischenträger-Module 40b und auch Grundträger-Modul 40a können beispielsweise aus Stahlprofil-Strukturen hergestellt werden. Es sind jedoch auch andere Konstruktionsarten zur Herstellung leichter plattenförmiger (flächiger) Tragstrukturen mit ausreichender mechanischer Festigkeit und Steifigkeit möglich, beispielsweise Wabenstrukturen oder korrugierte Bleche. Da die Kraftverteilung von der zentralen Zugstange auf die Funktionsmodulstapel über das Grundträgermodul 40a und das Deckträger-Modul 40c erfolgt, müssen diese stabiler ausgestaltet sein als die Zwischenträger-module 40b, welche im Wesentlichen vor allem die die Steifigkeit der Gesamtstruktur der Anlage 1 sicherstellen.

Die verschiedenen Funktionsmodule 20 des gezeigten Ausführungsbeispiels einer modularen Anlage 1 sind in geeigneter miteinander wirkverbunden, beispielsweise über Leitungen zum Transport von fluiden Materialien, Stromleitungen, Steuerkabel etc. Die in Figur 7 gezeigten Beispiele solcher Verbindungsleitungen 77' sind dabei rein illustrativ zu verstehen. Eine erfindungsgemässe modulare Anlage 1 kann zudem externe AnlagenModule 8 umfassen.

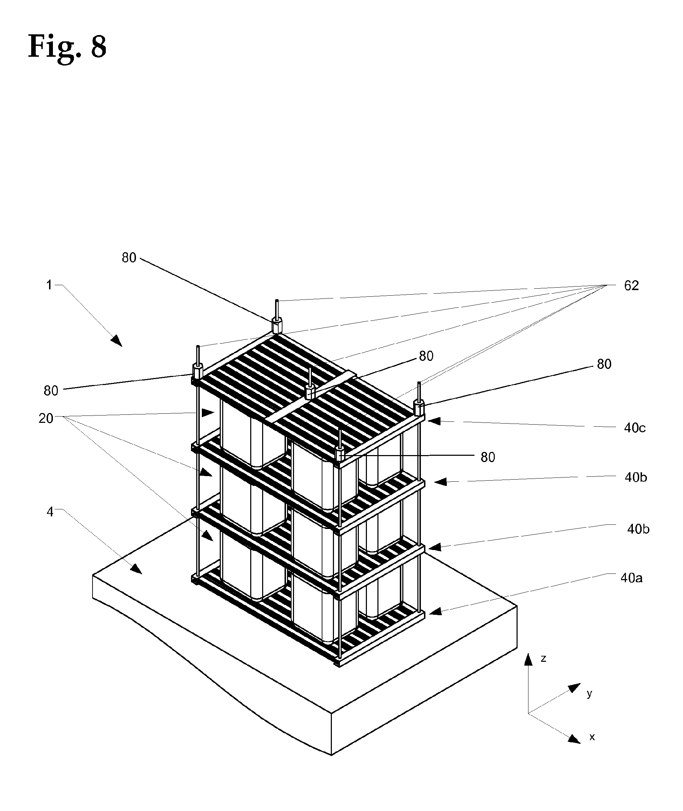

Figur 8 zeigt eine weitere erfindungsgemässe modulare Anlage 1 mit in drei Ebenen angeordneten Funktionsmodulen 20, ähnlich dem Beispiel aus Figur 7, wobei die Verbindungsleitungen der Übersichtlichkeit halber weggelassen sind. Die Module 20, 40a, 40b, 40c sind im gezeigten Beispiel mit fünf Zugelementen 62 verspannt. Die Verwendung mehrerer verteilter Zugelemente 62 ermöglicht im Vergleich zu einem einzigen Zugelement 62 insbesondere den Einsatz eines Deckträger-Moduls 40c mit einer geringeren Plattensteifigkeit, wodurch leichtere und kostengünstigere Konstruktionen für das Deckträger-Modul verwendet werden können. Ebenso ermöglicht die Verwendung mehrerer Zugelemente 62 eine bessere Anpassung der Anlage an die mechanischen Eigenschaften der Funktionsmodule 20.

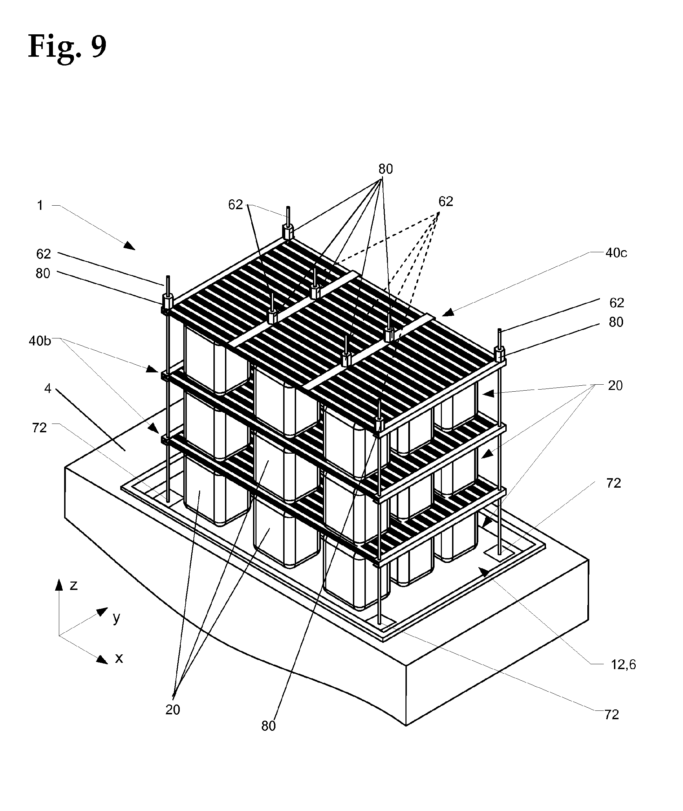

Figur 9 zeigt eine weitere Variante einer erfindungsgemässen modularen Anlage 1, mit 27 in drei Ebenen angeordneten Funktionsmodulen 20, die mit acht Zugelementen 62 verspannt sind. Das Grundträger-Modul 40a besteht im Wesentlichen aus einer Wanne 12, vorteilhaft aus Stahlbeton, die teilweise in den Untergrund 4 eingelassen ist. Die Verankerung der Zugelemente 62 erfolgt über Ankervorrichtungen 72 in der Wanne. Die Wanne 12 dient insbesondere als Sicherheitsvorkehrung, indem sie bei Störungen innerhalb der Anlage einem unkontrollierten Austreten von Flüssigkeiten in die Umwelt entgegenwirkt. Solche Auffangwannen werden deshalb für chemische Produktionsanlagen oft als Sicherheitsmassnahme vorgeschrieben.

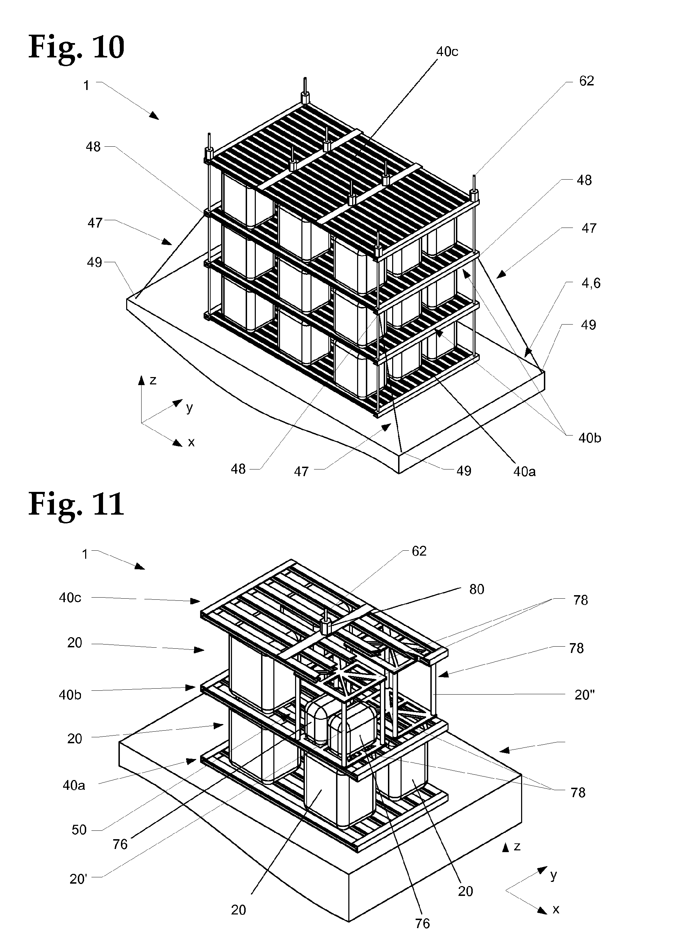

Figur 10 zeigt eine weitere vorteilhafte Ausführungsform einer erfindungsgemässen modularen Anlage 1, die im Grundaufbau demjenigen aus Figur 9 entspricht. Zur zusätzlichen Stabilisierung gegen seitlich wirkenden Kräfte verfügt die Anlage 1 über Abspannungen 47, die auf den Zwischenträger-Modulen 40b liegende Abspannpunkte 48 mit äusseren Verankerungen 49 mechanisch verbinden. Auf diese Weise können insbesondere Scherkräfte der Anlage in x/y-Richtung reduziert werden. Zusätzlich oder alternativ sind auch Abspannungen zwischen auf dem Deckträger-Modul liegenden Abspannpunkten und äusseren Verankerungen möglich.

Figur 11 zeigt ein anderes Ausführungsbeispiel einer erfindungsgemässen modularen Anlage 1 mit in zwei Anlagenebenen angeordneten Funktionsmodulen 20, 20', 20". Um auch Anlagenelemente 76 installieren zu können, deren Höhe stark von den Funktionsmodulen 20 derselben Anlagenebene abweicht, sind diese in einem Funktionsmodul 20' angeordnet, das im wesentlichen aus einer Tragstruktur 78 besteht. Zur besseren Sichtbarmachung der Tragstruktur ist ein Teil des darüber liegenden Deckträger-Moduls 40c weggelassen. Ebenso kann ein nur aus der Tragstruktur 78 bestehendes Funktionsmodul 20" auch als Platzhalter verwendet werden, um Stellen zu besetzen, an denen sich keine operativen Funktionsmodule 20 befinden. Dies kann beispielsweise dann sinnvoll sein, wenn bestimmte Stellen innerhalb der Anlage für mögliche spätere Erweiterungen der Anlage frei gehalten werden sollen.

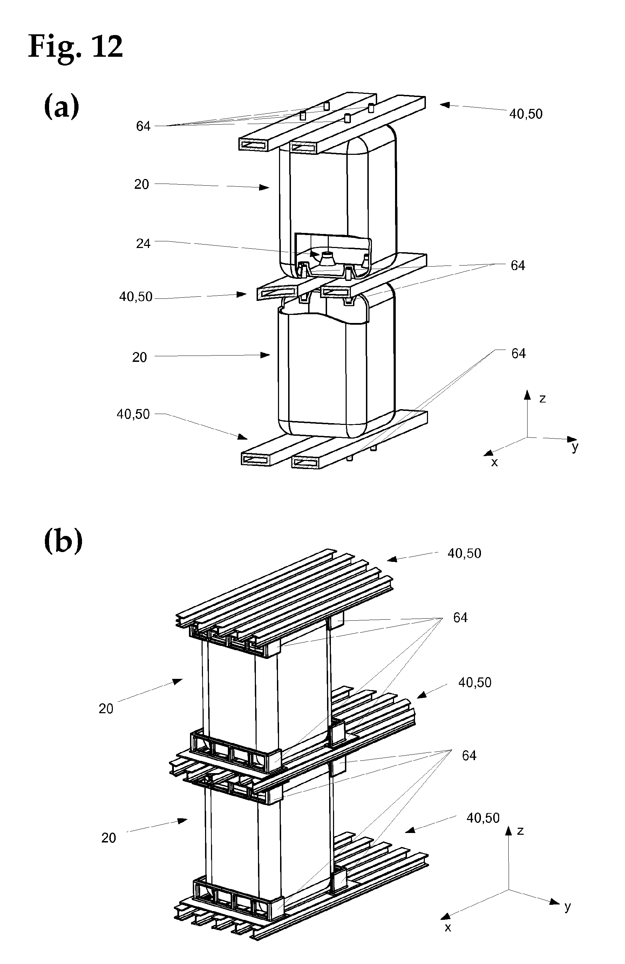

Figur 12 zeigt zwei andere mögliche horizontal formschlüssige Lagerungen von Funktionsmodulen 20 auf Trägern 50 eines Zwischenträger-Moduls 40b (bzw. Grundträger-Moduls 40a oder Deckenträger-Moduls 40c), wie es insbesondere bei den Ausführungsformen aus den Figuren 7 bis 11 angewendet werden kann. Die horizontal formschlüssige Lagerung verhindert Verschiebungen der einzelnen Funktionsmodule 20 gegenüber den Trägern 50 bzw. dem Zwischenmodul 40a/40b/40c in horizontaler Richtung.

In der in Figur 12(a) dargestellten Ausführungsform besteht die horizontal formschlüssige Lagerung im Wesentlichen aus in vertikaler Richtung (z-Richtung) ausgerichteten Bolzen 64, die in konischen Bolzenaufnahmen 24, 24' der Funktionsmodule 20 formschlüssig gehalten sind. Es ist auch möglich, dass ein Bolzen durch einen Träger hindurch gehend ausgestaltet und gleichzeitig zur horizontal formschlüssigen Lagerung zweier übereinander angeordneter Funktionsmodule verwendet wird. Figur 12(b) zeigt eine weitere Variante einer horizontal formschlüssigen Lagerung. Die Funktionsmodule 20 werden dabei von Rahmenelementen 64 gegen Verschiebungen in horizontaler Richtung abgestützt. Die Rahmenelemente 64 befinden sich in fester mechanischer Verbindung mit den Trägern 50.

Die vorliegende Erfindung ist in ihrem Umfang nicht auf die hier beschriebenen spezifischen Ausführungsformen beschränkt. Vielmehr ergeben sich für den Fachmann aus der Beschreibung und den dazugehörigen Figuren zusätzlich zu den hier offenbarten Beispielen verschiedene weitere Modifikationen der vorliegenden Erfindung, die ebenfalls in den Schutzbereich der Ansprüche fallen. Zusätzlich werden in der Beschreibung verschiedene Referenzen zitiert, deren Offenbarungsgehalt hiermit in deren Gesamtheit durch Referenz in die Beschreibung mit aufgenommen wird.

### Bezugszeichenliste

- 1: Modulare Anlage
- 4: Untergrund
- 6: Fundamentsockel
- 8: externes Anlagen-Modul
- 9: Verbindungsleitungen
- 12: Auffangwanne
- 20, 20a: Funktionsmodul
- 20, 20', 20": Funktionsmodul
- 20a: Hochmodul
- 21: Unterseite
- 22: Oberseite
- 24, 24': Lagerelement, Aufnahme für Verbindungselement
- 25, 25': konische Mantelfläche
- 26: zentrale Öffnung
- 40: Zwischenmodul
- 40a: Grundträger-Modul
- 40b: Zwischenträger-Modul
- 40c: Deckenträger-Modul
- 41: Unterseite
- 42: Oberseite
- 44, 44': Lagerelement, Aufnahme für Verbindungselement
- 45, 45': konische Mantelfläche
- 46: zentrale Öffnung
- 47: Abspannung
- 48: Abspannpunkt (Befestigung)
- 49: äussere Verankerungen
- 50: Träger
- 51, 51', 5": Querstrebe
- 62: Zugelement, Zugstange
- 64: Verbindungselement, Verbindungskonus
- 66, 66': konische Mantelfläche
- 68: Durchloch
- 70: Zugstangenanker
- 72: Fundamentanker
- 74: Tragsäulen
- 76: Anlagenelemente
- 77, 77': Leitungen
- 78: Tragstruktur
- 79: Hülle, Aussenwand
- 80: Spannvorrichtung
- 82: Lagerelement, Aufnahme für Verbindungselement
- 83: konische Mantelfläche
- 84: Mutter
- 86: Gehäuse
- 90: Federelement, Druckfeder
- 92: erste Auflagescheibe
- 93: Hülse
- 94: zweite Auflagescheibe
- 95: Hülse

## Patentansprüche

1. Modulare Anlage (1), insbesondere eine modulare Industrieanlage, mit mehreren quaderförmigen Anlagemodulen (20, 20a, 40, 40a, 40b, 40c), die in zwei oder mehr Lagen übereinander gestapelt angeordnet sind, wobei die Module eine Tragstruktur (78) mit Befestigungspunkten (24, 24', 44, 44') aufweisen, wobei die Befestigungspunkte vorgesehen sind zu Verbindung eines Moduls mit entsprechenden Befestigungspunkten der angrenzenden Module einer darüber und/oder darunter liegenden Lage, **dadurch gekennzeichnet, dass** die Module (20, 40) einer Lage mit den angrenzenden Modulen (40, 20) der darüber und/oder darunter liegenden Lage in der horizontalen Ebene (x-y) formschlüssig verbunden sind (24, 24', 64, 44, 44'), und dass mindestens eine Zugkraftvorrichtung (62, 70, 80) mit einem Zugelement (62) vorgesehen ist, mit der entlang der Senkrechten (z) eine unterste Lage von Modulen (40a) bzw. ein Fundamentblock (6) gegenüber einer obersten Lage von Modulen (40c) mit einer Zugkraft beaufschlagt werden kann, so dass die Module zwischen der genannten untersten Lage und der genannten obersten Lage mit den angrenzenden Modulen (40, 20) der darüber und/oder darunter liegenden Lage entlang der Senkrechten (z) an den Befestigungspunkten kraftschlüssig aneinandergedrückt und so fixiert werden.

2. Anlage nach Anspruch 1, wobei wechselweise Lagen mit einem Träger-Modul (40, 40a, 40b, 40c, 6) und einem oder mehreren Funktionsmodulen (20, 20', 20", 20a) übereinander angeordnet sind.

3. Anlage nach Anspruch 1 oder 2, wobei die Module (20, 20a, 40) derart angeordnet sind, dass bei mindestens einer Lage von Modulen die Befestigungspunkte von zwei oder mehr Modulen der genannten Lage mit Befestigungspunkten eines gemeinsamen Moduls einer darüber liegenden und/oder einer darunter liegenden Lage verbunden sind.

4. Anlage nach einem der Ansprüche 1 bis 3, wobei die Module (20, 20a, 40) derart verschränkt angeordnet und gestapelt sind, dass zumindest ein Teil der Module ein dreidimensionales Gitter bilden.

5. Anlage nach einem der Ansprüche 1 bis 3, wobei auf einer Oberseite (22, 42) der Tragstruktur (78) der Module (20, 20a, 40) drei oder mehr Lagerelemente (24', 44') angeordnet sind, die eine erste Ebene definieren; auf einer der Oberseite abgewandten Unterseite (21, 41) der Tragstruktur drei oder mehr Lagerelemente (24, 44) angeordnet sind, die eine zur ersten Ebene parallele zweite Ebene definieren; jeweils ein Lagerelement auf der Oberseite und ein Lagerelement auf der Unterseite ein Paar bilden und gefluchtet zueinander entlang einer zur Normalen der Ebenen parallelen Geraden angeordnet sind; und wobei die Lagerelemente als Befestigungspunkte der Module dienen.

6. Anlage nach Anspruch 5, wobei die Lagerelemente (24, 24', 44, 44') der Module (20, 20a, 40) eine konische Ausnehmung (25,25' 45, 45') aufweisen.

7. Anlage nach Anspruch 5 oder 6, wobei die Lagerelemente (24, 24', 44, 44') der Module (20, 20a, 40) eine zentrale Öffnung (26, 46) aufweisen, so dass durch die Öffnungen entlang der durch jeweils zwei gepaarte Lagerelemente definierten Geraden ein Zugelement (62) durchführbar ist bzw. durchgeführt ist.

8. Anlage nach einem der Ansprüche 5 bis 7, wobei zwei einander zugewandte Lagerelemente (24, 24', 44, 44') zweier aneinandergrenzender Module (20, 20a, 40) benachbarter Lagen durch ein Verbindungselement (64) verbunden sind.

9. Anlage nach Anspruch 8, wobei die Lagerelemente (24, 24', 44, 44') (20, 20a, 40) der Module eine konische Ausnehmung (25, 25' 45, 45') aufweisen, und das Verbindungselement (64) die Form eines Doppelkegels oder eines Doppelkegelstumpfs aufweist, wobei jeweils ein Kegel bzw. Kegelstumpf des Verbindungselements bündig in der konischen Aufnahme eines der zwei Lagerelemente angeordnet ist.

10. Anlage nach Anspruch 8 oder 9, wobei das Verbindungselement (64) ein Durchloch (68) aufweist, durch welches ein Zugelement (62) durchführbar ist bzw. durchgeführt ist.

11. Anlage nach einem der Ansprüche 5 bis 10, wobei die Module (20, 20a, 40) derart angeordnet sind, dass die Lagerelemente (24, 24', 44, 44') aller Module entlang einer Mehrzahl von zur Senkrechten (z) parallelen Geraden gefluchtet sind, und entlang jeder dieser Geraden ein Zugelement (62) durchführbar ist, bzw. ein Zugelement angeordnet ist.

12. Modul (20, 20a, 40) für eine modulare Anlage (1) nach einem der Ansprüche 1 bis 11, mit einer Tragstruktur (78), wobei auf einer Oberseite (22, 42) der Tragstruktur (78) drei oder mehr Lagerelemente (24', 44') angeordnet sind, die eine erste Ebene definieren; auf einer der Oberseite abgewandten Unterseite (21, 41) der Tragstruktur drei oder mehr Lagerelemente (24, 44) angeordnet sind, die eine zur ersten Ebene parallele zweite Ebene definieren; und jeweils ein Lagerelement auf der Oberseite und ein Lagerelement auf der Unterseite ein Paar bilden und gefluchtet zueinander entlang einer zur Normalen der Ebenen parallelen Geraden angeordnet sind.

13. Modul nach Anspruch 12, wobei die Lagerelemente (24, 24', 44, 44') eine konische Ausnehmung (25, 25' 45, 45') aufweisen, und/oder eine zentrale Öffnung (26, 46) aufweisen, so dass durch die Öffnungen entlang der durch jeweils zwei gepaarte Lagerelemente definierten Geraden ein Zugelement (62) durchführbar ist.

14. Modul nach Anspruch 1 2 oder 13, wobei zwischen zwei gepaarten Lagerelementen (24, 24', 44, 44') jeweils eine Tragsäule (78) angeordnet ist.

15. Montageset zum Aufbau einer modularen Anlage nach einem der Ansprüche 1 bis 11, umfassend mehrere Module (20, 20a, 40) nach einem der Ansprüche 12 bis 14, und einem oder mehreren Zugelementen (62).
